# DEMANDE DE BREVET EUROPEEN

(11) **EP 1 170 188 A1**
(43) Date de publication de la demande: **09.01.2002**
(21) Numéro de dépôt: 01490024.5
(22) Date de dépôt: 06.07.2001
(51) Int. Cl.: B61H 5/00

(54) **Dispositif de freinage sur les deux faces opposées d'une pièce de révolution**

(30) Priorité: 06.07.2000 FR 0008784
(71) Demandeur: ARBEL FAUVET RAIL S.A., F-59500 Douai (FR)
(72) Inventeur: Ven, Jean Michel Robert, 59800 Lille (FR)
(74) Mandataire: Hénnion, Jean-Claude

(57) **Abrégé**

L'invention se rapporte à un dispositif de freinage sur les deux faces opposées d'une pièce de révolution comprenant :
- deux plaquettes (2) de frein suspendues par des biellettes (3) à un support (4) de reprise des efforts,
- articulés sur ce support (4), les deux bras (5) d'une pince transmettant, à la face arrière (7) des plaquettes, la force produite à l'une des deux extrémités de la pince par un actionneur, lesquelles plaquettes étant constituées d'une garniture portée par une plaque support.

Il est caractérisé en ce que :
- d'une part, l'axe d'articulation de chaque biellette (3) sur la plaquette est situé dans un plan contenu dans l'épaisseur de la plaque support et
- d'autre part, l'extrémité (5A) de la pince qui coopère avec la face arrière de la plaquette est en simple appui sur la dite face arrière.

## Description

L'invention se rapporte à un dispositif de freinage sur les deux faces opposées d'une pièce de révolution.

Cette invention trouve plus particulièrement utilisation dans le domaine ferroviaire.

Sur les véhicules ferroviaires, on exploite principalement deux types de dispositifs de freinage.

Le premier type utilise des sabots qui s'appliquent sur la table de roulement des roues.

Ces dispositifs ayant des performances limitées, pour différentes raisons, ils sont de plus en plus souvent remplacés par un deuxième type de dispositif de freinage qui consiste à pincer les deux faces opposées d'un disque avec des plaquettes de frein.

Classiquement, un tel dispositif de freinage comprend :
- deux plaquettes de frein suspendues par des biellettes à un support de reprise des efforts, et
- articulés sur ce support à la manière de levier pour être mobiles dans un plan horizontal, les deux bras d'une pince transmettant, à la face arrière des plaquettes, la force produite à l'une des deux extrémités de la pince par un actionneur.

Sur les systèmes actuels, chaque plaquette de frein est constituée par deux demi-garnitures portées par l'une des faces d'une plaque support.

Chaque bras de la pince est constituée par un couple de bras qui coopèrent chacun avec un couple de chapes présentées par la face arrière de la garniture.

Chacune des chapes précitées se localise au centre de masse des demi-garnitures et permet de répartir la force développée par l'actionneur.

La face arrière de la plaquette de frein porte également l'articulation de la biellette à laquelle elle est suspendue.

Les bras de la pince étant portés par une articulation distante des deux extrémités, ces bras fonctionnent à la manière d'un levier.

L'amplification mécanique de ces leviers est déterminée par deux longueurs à savoir celle mesurée entre l'axe d'articulation du bras sur le support et le point d'application sur la plaquette et celle mesurée entre l'axe d'articulation du bras sur le support et le point d'application de l'actionneur.

Si, théoriquement, ce rapport est ajustable, pratiquement il existe une limitation liée à l'encombrement du système et à la place disponible.

L'invention a pour objet notamment de remédier aux inconvénient précités.

A cet effet, l'invention a pour objet un dispositif de freinage du type précité comprenant :
- deux plaquettes de frein suspendues par des biellettes à un support de reprise des efforts,
- articulés sur ce support à la manière de leviers pour être mobiles dans un plan horizontal, les deux bras d'une pince transmettant, à la face arrière des plaquettes, la force produite à l'une des deux extrémités de la pince par un actionneur, lesquelles plaquettes étant constituées d'une garniture portée par une plaque support,
ce dispositif étant caractérisé en ce que :
- d'une part, l'axe d'articulation de chaque biellette sur la plaquette est situé dans un plan contenu dans l'épaisseur de la plaque support et
- d'autre part, l'extrémité de la pince qui coopère avec la face arrière de la plaquette est en simple appui sur la dite face arrière.

L'invention sera bien comprise à l'aide de la description ci-après faite à titre d'exemple non limitatif en regard du dessin ci-annexé qui représente schématiquement :

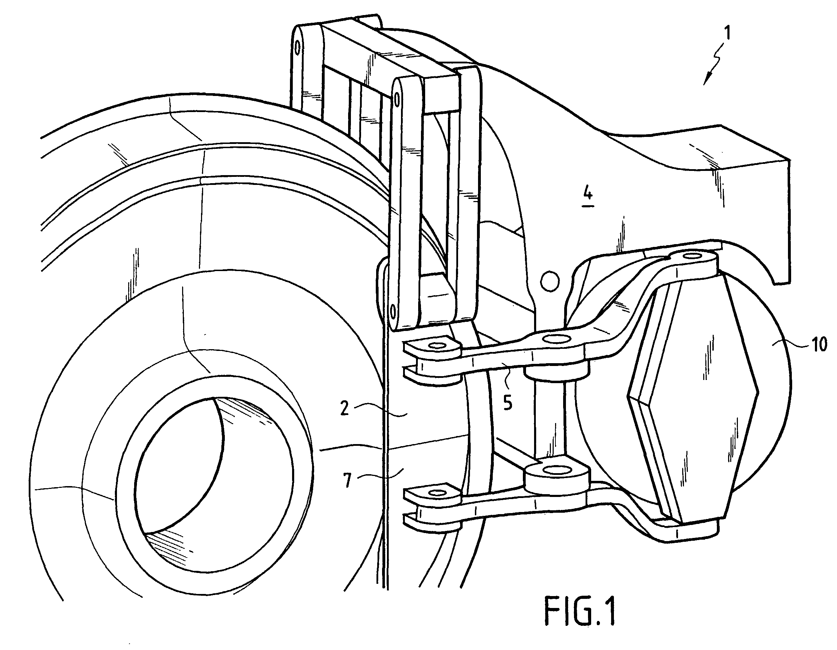

- figure 1 : état antérieur de la technique,

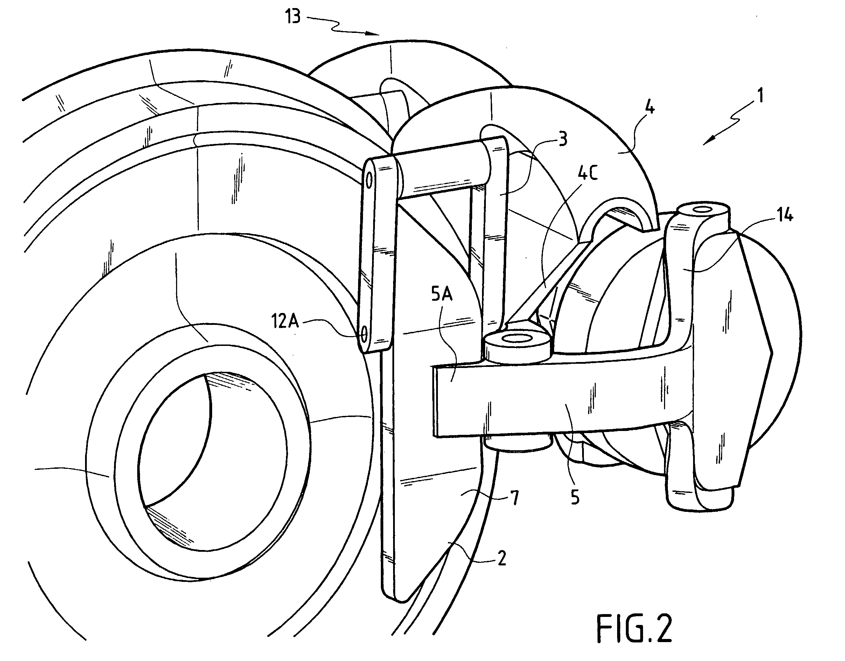

- figure 2 : le dispositif de freinage selon l'invention,

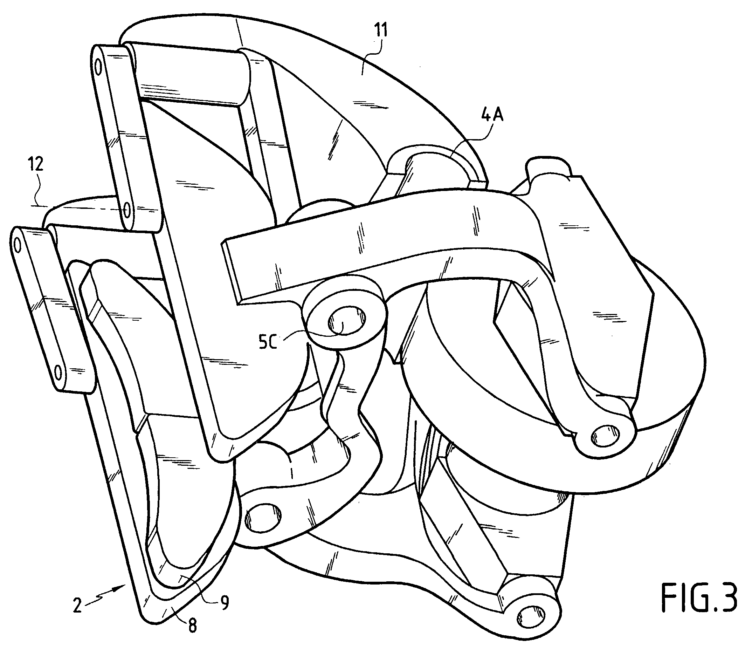

- figure 3 : le dispositif de freinage selon l'invention vu sous un autre angle.

En se reportant au dessin, on voit un dispositif 1 de freinage comprenant :
- deux plaquettes 2 de frein suspendues par des biellettes 3 à un support 4 de reprise des efforts,
- articulés sur ce support 4 à la manière de leviers pour être mobiles dans un plan horizontal, les deux bras 5 d'une pince transmettant, à la face arrière 7 des plaquettes, la force produite à l'une des deux extrémités de la pince par un actionneur, lesquelles plaquettes étant constituées d'une garniture 8 portée par une plaque 9 support.

Pour le freinage, les garnitures 8 sont appliquées sur les deux faces opposées d'une pièce de révolution, telle un disque ou les flancs d'une roue disque.

La garniture a une forme de croissant et elle est montée de sorte que le grand axe du croissant est vertical .

Elle est généralement en deux parties.

L'actionneur 10 écarte les extrémité des bras de la pince, ce qui rapproche les autres extrémités qui portent indirectement les garnitures 8 de frein .

Le support 4 est donc fixé dans le plan de la roue mais latéralement à cette roue.

Par rapport à sa fixation sur le châssis, les biellettes sont montées en porte à faux et, de ce fait, le support comprend des cornes 11 qui permettent de suspendre ces biellettes 3.

Chaque biellette 3 est donc articulée sur le support 4 et sur la plaquette 2 selon des axes parallèles aux faces opposées de la pièce de révolution.

Selon une caractéristique de l'invention :
- d'une part, l'axe 12 d'articulation de chaque biellette 3 sur la plaquette est situé dans un plan contenu dans l'épaisseur de la plaque 9 support et
- d'autre part, l'extrémité 5A de la pince qui coopère avec la face arrière de la plaquette est en simple appui sur la dite face arrière.

Avantageusement, l'extrémité 5A de la pince qui prend appui sur la face arrière 7 de plaque 9 support de la garniture, prend appui en une zone centrale de la dite plaque support et cette plaque support présente une raideur et résistance suffisante pour transmettre la force de l'extrémité de la pince à la garniture sans déformation locale de la plaque support.

La pression qui s'exerce entre la garniture et la face du disque doit être homogène pour éviter la création de rainure dans le disque.

A titre de comparaison, l'épaisseur de la plaque support sera, par exemple, deux fois plus importante que celle habituellement utilisée.

En augmentant ainsi l'épaisseur de la plaque support, on peut loger dans cette épaisseur l'axe d'articulation de la biellette.

En supprimant par ailleurs l'ensemble des chapes d'articulation de la pince et de la biellette, on peut éloigner l'articulation avec les biellettes du bord supérieur de la plaquette.

La plaque support de la garniture porte donc sur ces deux champs latéraux un tourillon 12A.

En supprimant les chapes utilisées dans l'état antérieur, on réduit l'encombrement du dispositif dans la dimension transversale au sens de déplacement du bogie.

Cela est très avantageux lorsque le système de freinage s'applique sur les flancs des roues et qu'il faut éviter les ressorts primaires de la suspension.

Cela permet par ailleurs d'augmenter l'amplification mécanique des bras de levier.

On double l'amplification par rapport aux système antérieurs.

Cela permet de limiter le nombre de système de freinage et donc le coût d'équipement du bogie.

On peut également positionner l'axe d'articulation des biellettes plus bas et donc abaisser la hauteur du système et réduire l'encombrement vertical.

Avantageusement, la partie haute 13 du support 4 sur lequel est accroché le haut des biellettes est à un niveau 10 inférieur à celui où se situe le haut de la roue et/ou du disque et plus précisément de la table de roulement de la dite roue lorsqu'il s'agit d'une roue.

Cela permet donc d'abaisser la hauteur de la plate-forme du wagon.

Les biellettes 3 sont montées de manière que le poids des plaquettes tend à écarter ces plaquettes du disque ou de la roue.

En position active des plaquettes, les biellettes sont inclinées par rapport à la verticale pour former un Vé ouvert vers le haut.

L'extrémité libre 5A de la partie de la pince située entre son axe d'articulation sur le support et son point d'application est en biseau et l'autre partie de la pince située de l'autre coté de l'articulation est fortement courbée pour se diviser ensuite en deux branches 14 dont les extrémités libres sont articulées sur l'actionneur.

La concavité de la courbe précitée est tournée vers l'actionneur qui est montée entre les deux bras 5 de la pince.

Le support 4 du système est associé rigidement au châssis

Avantageusement, ce support est fixé sur un tube ou barre transversale (non représentée) solidaire du châssis du bogie, lequel tube est situé entre la roue et l'actionneur.

On réduit donc également l'encombrement du système suivant l'axe longitudinal du bogie

Ce support comprend un profilé 4A d'appui sur le tube précité sur lequel profilé sont montés, d'une part, les cornes 11 pour la suspension des biellettes 3 et, d'autre part, une structure 4C porteuse qui, inclinée vers le bas en direction de la roue, porte les articulations 5C des bras 5 de levier de la pince.

De préférence, ce profilé d'appui est fixé par soudure sur le tube équipant le châssis.

## Revendications

1. Dispositif de freinage sur les deux faces opposées d'une pièce de révolution comprenant :
- deux plaquettes (2) de frein suspendues par des biellettes (3) à un support (4) de reprise des efforts,
- articulés sur ce support (4) à la manière de leviers pour être mobiles dans un plan horizontal, les deux bras (5) d'une pince transmettant, à la face arrière (7) des plaquettes, la force produite à l'une des deux extrémités de la pince par un actionneur, lesquelles plaquettes étant constituées d'une garniture (8) portée par une plaque (9) support,
ce dispositif étant **CARACTERISE en ce que** :
- d'une part, l'axe (12) d'articulation de chaque biellette (3) sur la plaquette est situé dans un plan contenu dans l'épaisseur de la plaque (9) support et
- d'autre part, l'extrémité (5A) de la pince qui coopère avec la face arrière de la plaquette est en simple appui sur la dite face arrière.

2. Dispositif de freinage selon la revendication 1 **caractérisé en ce que** l'extrémité (5A) de la pince qui prend appui sur la face arrière (7) de plaque (9) support de la garniture, prend appui en une zone centrale et cette plaque support présente une raideur et résistance suffisante pour transmettre la force de l'extrémité de la pince à la garniture sans déformation locale de la plaque support.

3. Dispositif de freinage selon la revendication 1 **caractérisé en ce que** la plaque support de la garniture porte sur ces deux champs latéraux un tourillon (12A).

4. Dispositif de freinage selon la revendication 1 ou 2 **caractérisé en ce que** l'extrémité libre (5A) de la partie de la pince située entre son axe d'articulation sur le support et son point d'application est en biseau et l'autre partie de la pince située de l'autre coté de l'articulation est fortement courbée pour se diviser ensuite en deux branches (14) dont les extrémités libres sont articulées sur l'actionneur.

5. Dispositif de freinage selon la revendication 4 **caractérisée en ce que** la concavité de la courbe est tournée vers l'actionneur qui est montée entre les deux bras (5) de la pince.

6. Dispositif de freinage selon la revendication 1 **caractérisée en ce que** la partie haute (13) du support (4) sur lequel est accroché le haut des biellettes est à un niveau (10) inférieur à celui où se situe le haut de la roue et/ou du disque et plus précisément de la table de roulement de la dite roue lorsqu'il s'agit d'une roue.

7. Dispositif de freinage selon la revendication 4 **caractérisée en ce que** le support est fixé sur un tube ou barre transversale solidaire du châssis du bogie, lequel tube est situé entre la roue et l'actionneur.

8. Dispositif selon la revendication 7 **caractérisé en ce que** le support comprend un profilé (4A) d'appui sur le tube, sur lequel profilé sont montés, d'une part, les cornes (11) pour la suspension des biellettes (3) et, d'autre part, une structure (4C) porteuse qui, inclinée vers le bas en direction de la roue, porte les articulations (5C) des bras (5) de levier de la pince.

9. Dispositif selon la revendication 8 **caractérisé en ce que** le profilé d'appui est fixé par soudure sur le tube équipant le châssis.

10. Dispositif selon la revendication 1 **caractérisé en ce que** les biellettes (3) sont montées de manière que le poids des plaquettes tend à écarter ces plaquettes du disque ou de la roue et, en position active des plaquettes, les biellettes sont inclinées par rapport à la verticale pour former un Vé ouvert vers le haut.
